Europäisches Patentamt

European Patent Office

Office européen des brevets

(11) Veröffentlichungsnummer: **0 305 586 B1**

(12) **EUROPÄISCHE PATENTSCHRIFT**

(45) Veröffentlichungstag der Patentschrift: **19.11.92**

(51) Int. Cl.5: **H04Q 11/04**, H04Q 3/54

(21) Anmeldenummer: **87115289.8**

(22) Anmeldetag: **14.12.83**

(60) Veröffentlichungsnummer der früheren Anmeldung nach Art. 76 EPÜ: **0 113 884**

(54) **Schaltungsanordnung für eine Fernmeldeanlage, insbesondere Fernsprechnebenstellenanlage, mit Teilnehmer- und Leitungs-Übertragungsgruppen und Schnittstellenbaugruppen.**

(30) Priorität: **22.12.82 DE 3247598**
**21.01.83 DE 3301996**

(43) Veröffentlichungstag der Anmeldung:
**08.03.89 Patentblatt 89/10**

(45) Bekanntmachung des Hinweises auf die Patenterteilung:
**19.11.92 Patentblatt 92/47**

(84) Benannte Vertragsstaaten:
**AT BE CH DE FR GB IT LI NL SE**

(56) Entgegenhaltungen:

PROCEEDINGS 1982 INTERNATIONAL SYMPOSIUM ON SUBSCRIBER LOOPS AND SERVICES, Toronto, 20.-24. September 1982, Seiten 62-65, IEEE, New York, US; G.M.J. HAVERMANS et al.: "Digital subscriber lines to PRX/D"

ELECTRICAL COMMUNICATION, Band 56, Nr. 1, 1981, Seiten 44-56, Heidenheim, DE; G. TOLUSSO et al.: "Application of distributed control to handling non-voice services"

INTERNATIONAL SWITICHING SYMPOSIUM 1981, Montreal, 21.-25. September 1981, "Session" 23C, "Paper" 2, Seiten 1-7; W. STROBELT: "Digital switching in private networks"

(73) Patentinhaber: **SIEMENS AKTIENGESELLSCHAFT**
**Wittelsbacherplatz 2**
**W-8000 München 2(DE)**

(72) Erfinder: **Beckinger, Günther**
**Im Tann 7**
**W-8034 Unterpfaffenhofen(DE)**
Erfinder: **Egler, Gerhard**
**Makartstrasse 15**
**W-8000 München 71(DE)**
Erfinder: **Rambold, Thomas, Dipl.-Ing.**
**Brauhausgasse 28**
**W-8031 Gilching(DE)**

EP 0 305 586 B1

**Beschreibung**

Die Erfindung bezieht sich auf eine Schaltungsanordnung für eine Fernmeldeanlage, insbesondere Fernsprechnebenstellenanlage, mit Teilnehmer- und Leitungsübertragungsgruppen, wobei die jeweiligen Gruppen und die kombinierten Teilnehmer-/Leitungsübertragungsgruppen über jeweils eine Schnittstellenbaugruppe solcher Gruppe sowohl mit dem Sprechwegekoppelnetzwerk als auch über ein Datenübertragungsleitungsbündel mit einer für die Verbindungswegeherstellung der ankommend bzw. abgehend belegbaren Teilnehmer- bzw. Verbindungsleitungen vorgesehenen zentralen Steuerung in Verbindung stehen und wobei die Informationen über das Sprechwegekoppelnetzwerk im Pulscodemodulationsverfahren und die Informationen über das Datenübertragungsleitungsbündel in einem Nachrichtenformat mit variabler Datenlänge (HDLC-Prozedur) übertragen werden und wobei ferner jeder Schnittstellenbaugruppe eine dem Senden und Empfangen sowie Zwischenspeichern von Sprach- und Signalinformationen und dem Zustandsüberwachen dienende Schnittstellenschaltung zugeordnet ist.

Aus der Zeitschrift "Telcom report 2" (1979), Heft 3, Seiten 174 bis 183, ist eine Architektur einer neuen Linie digitaler öffentlicher Fernsprechvermittlungen bekannt, bei der Teilnehmer- und Leitungsübertragungsgruppen über jeweils eine gemeinsame Schnittstellenbaugruppe pro solcher Gruppe mit einem Sprechwegekoppelnetzwerk in Verbindung stehen. Die Sprachinformationen werden über das Sprechwegekoppelnetzwerk im Pulscodemodulationsverfahren übertragen. Die anderen Informationen, die für die Verbindungswegeherstellung erforderlich und zu einem der Gruppe zugeordneten Gruppenprozessor zu übertragen sind, werden über getrennte Datenübertragungsleitungen direkt diesem Gruppenprozessor zugeführt, während die Informationen, die für die Verbindungswegeherstellung und die Verarbeitung in der zentralen Steuerung erforderlich sind, über getrennte Datenübertragungsleitungen, über einen Gruppenkoppler und das gemeinsame Koppelnetz zwischen den Schnittstellenbaugruppen und der zentralen Steuerung bzw. zwischen den Gruppenprozessoren und der zentralen Steuerung ausgetauscht werden. Die Informationen, die über die besonderen Datenübertragungsleitungsbündel bzw. über die zentralen Zeichenkanäle gegeben werden, werden in einem Nachrichtenformat mit variabler Datenlänge (HDLC-Prozedur) übertragen.

Ferner ist aus der Zeitschrift NEC Research and Development, Nr. 64, Januar 1982, Seiten 86 bis 93, ein digitales Übertragungssystem bekannt, bei dem über besondere Übertragungswege, die zum Teil auch Sprachübertragungswege umfassen, Informationen zwischen zentralen Steuerungen ausgetauscht werden. Die Sprachinformationen werden im Pulscodemodulationsverfahren übertragen. Die zwischen den zentralen Steuerungen zu übertragenden Informationen werden vom Nachrichtenformat mit variabler Datenlänge umgesetzt in Pulscodeinformationen und über den genannten Übertragungsweg in einem bestimmten Pulsrahmen bestimmter Länge übertragen. Der vorgenannte Informationaustausch zwischen den zentralen Steuerungen erfolgt dabei nicht über die Schnittstellenbaugruppen, die in diesem beschriebenen System in analoger Technik arbeiten.

Ferner ist gemäß PROCEEDINGS 1982, INTERNATIONAL SYMPOSIUM ON SUBSCRIBER LOOPS ANS SERVICES, Toronto, 20./24.09.1982, Seiten 62/65, IEEE, New York, US; G.M.J. Havermans et al.: "Digital subscriber lines to PRX/D", ein Nebenstellensystem bekannt, das im Teilnehmerbereich Schnittstellenbaugruppen aufweist, an die digital betriebene Teilnehmeranschlußleitungen angeschlossen sind. Über die digitalen Teilnehmeranschlußleitungen werden dabei zwei B-Kanäle sowie ein D-Kanal übertragen. Insbesondere sind innerhalb einer Schnittstellenbaugruppe Sende- und Empfangseinrichtungen vorhanden, die es ermöglichen, Informationen in einem Nachrichtenformat mit variabler Datenlänge zu fragmentieren, auf den D-Kanal einzuspeisen und somit über die Teilnehmeranschlußleitung zu übertragen. Des weiteren ist ein Austausch von derartigen Informationen in Abhängigkeit von Steuerbefehlen der zentralen Steuerung des Nebenstellensystems über ein Sprechwegekoppelnetzwerk mit beliebigen Gegenstellen möglich.

Die der Erfindung zugrundeliegende Aufgabe besteht darin, eine Fernmeldeanlagenkonfiguration zu bilden, in der in einfacher Weise nicht nur Sende- und Empfangseinrichtungen für Teilnehmer- und Leitungsübertragungsgruppen sowie kombinierte Teilnehmer-/Leitungsübertragungsgruppen, sondern auch solche Sende- und Empfangseinrichtungen anschaltbar sind, über die beliebige Dateninformationen, die über das Sprechwegekoppelnetzwerk übertragbar sind, gesendet und empfangen werden können.

Dies wird ausgehend von der eingangs definierten Schaltungsanordnung dadurch erreicht, daß an Teilnehmer- und Leitungsanschlüsse jeder Schnittstellenbaugruppe eine bzw. mehrere Sende- und Empfangseinrichtungen, die auch zum Senden und Empfangen von Informationen in einem Nachrichtenformat mit variabler Datenlänge (HDLC-Prozedur) dienen, derart anschaltbar sind, daß ein Austausch von Signalinformationen in Abhängigkeit von Steuerbefehlen der zentralen Steuerung und/oder von einer der Schnittstellenbaugruppe zugeordneten, über ein schnittstellenbaugruppeninternes Datenübertragungsleitungsbündel mit der Schnittstellenschaltung, mit dem Sprechwegekoppelnetzwerk, mit dem Datenübertragungsleitungs-

2

bündel und mit den Sende- und Empfangseinrichtungen in Verbindung stehenden peripheren Steuerung über das Sprechwegekoppelnetzwerk mit beliebigen Gegenstellen erfolgt.

Hierdurch kann unter Verwendung einer schnittstellenbaugruppeneigenen peripheren Steuerung und einer Schnittstellenbaugruppe, an die nicht nur Teilnehmer und Verbindungsleitungen, sondern auch Sende- und Empfangseinrichtungen für beliebige Dateninformationen anschaltbar sind, über das Sprechwegekoppelnetzwerk sowohl der Austausch von Sprachinformationen als auch von Dateninformationen erfolgen. Hierdurch sind in einfacher Weise Datenendgeräte anschaltbar, über die sowohl Informationen eingegeben als auch empfangen, ausgedruckt und optisch dargestellt werden können.

Gemäß einer weiteren Ausbildung der Erfindung stehen die an die Schnittstellenbaugruppen angeschalteten Sende- und Empfangseinrichtungen über ein gemeinsames Datenübertragungsleitungsbündel mit der peripheren Steuerung und mit dem internen Datenübertragungsleitungsbündel der betreffenden Schnittstellenbaugruppe in Verbindung. Auf diese Weise ist die Sende- und Empfangseinrichtung über die periphere Steuerung steuerbar.

Gemäß einer weiteren Ausbildung der Erfindung stehen die periphere Steuerung und das gemeinsame Datenübertragungsleitungsbündel über periphere Schnittstellenschaltungen mit dem schnittstellenbaugruppeninternen Datenübertragungsleitungsbündel in Verbindung. Auf diese Weise kann eine angeschaltete Sende- und Empfangseinrichtung auch von der zentralen Steuerung beeinflußt werden.

Gemäß einer weiteren Ausbildung der Erfindung weisen die Schnittstellenbaugruppen Zeit- und Steuerschaltmittel für das pulscodierte Senden und Empfangen von Sprach- und/oder Dateninformationen auf, die ebenfalls mit dem schnittstellenbaugruppeninternen Datenübertragungsleitungsbündel in Verbindung stehen. Auf diese Weise kann über die Schnittstellenbaugruppe die pulscodierte Übertragung von beliebigen Dateninformationen erfolgen, die von der angeschalteten Sende- und Empfangseinrichtung gesendet bzw. empfangen werden.

Insgesamt ermöglicht die erfindungsgemäße Schaltungsanordnung, daß über die den Schnittstellenbaugruppen zugeordneten Sende-und Empfangseinrichtungen beliebige Dateninformationen zwischen beliebigen Endstellen in Form von Datenpaketen ausgetauscht werden können.

Nachstehend ist die Erfindung anhand eines in drei Figuren dargestellten Ausführungsbeispiels der Erfindung beschrieben.

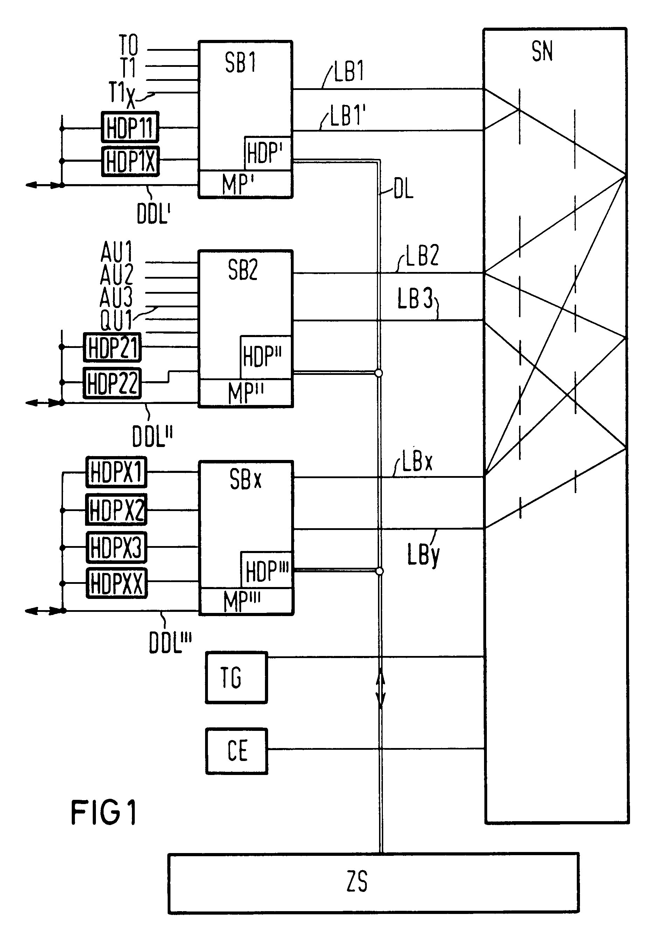

Die Fig. 1 zeigt eine digitale Fernsprechnebenstellenanlage in vereinfachter Darstellung, anhand der die Funktionen des Verbindungsaufbaus erläutert sind. In diesem Zusammenhang wird auch auf die in der Einleitung genannte Zeitschrift "telcom report 2" verwiesen.

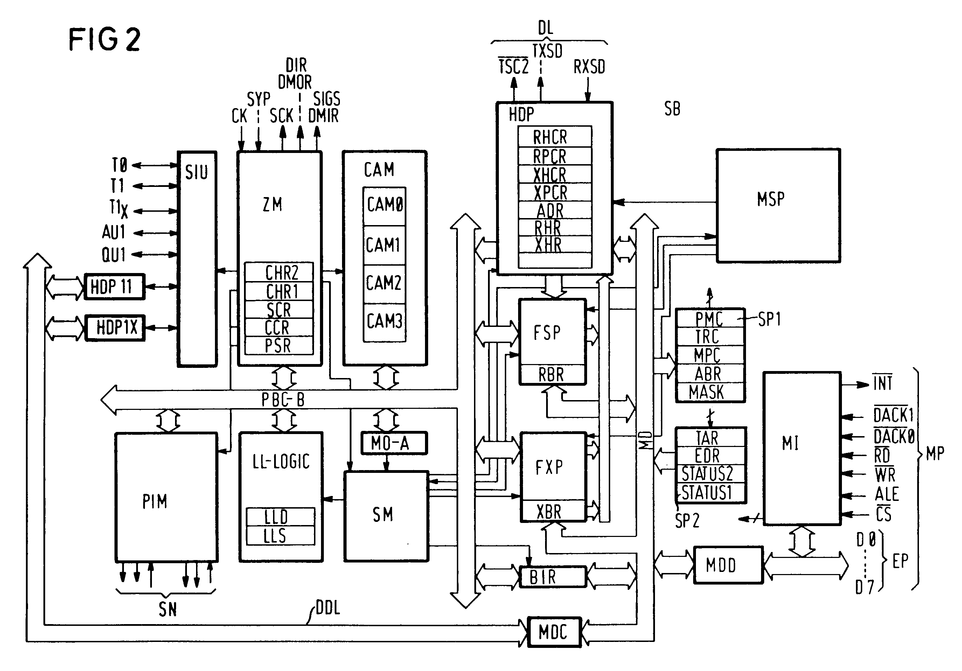

Aus der Fig. 2 ist der Aufbau der Schnittstellenbaugruppe entnehmbar.

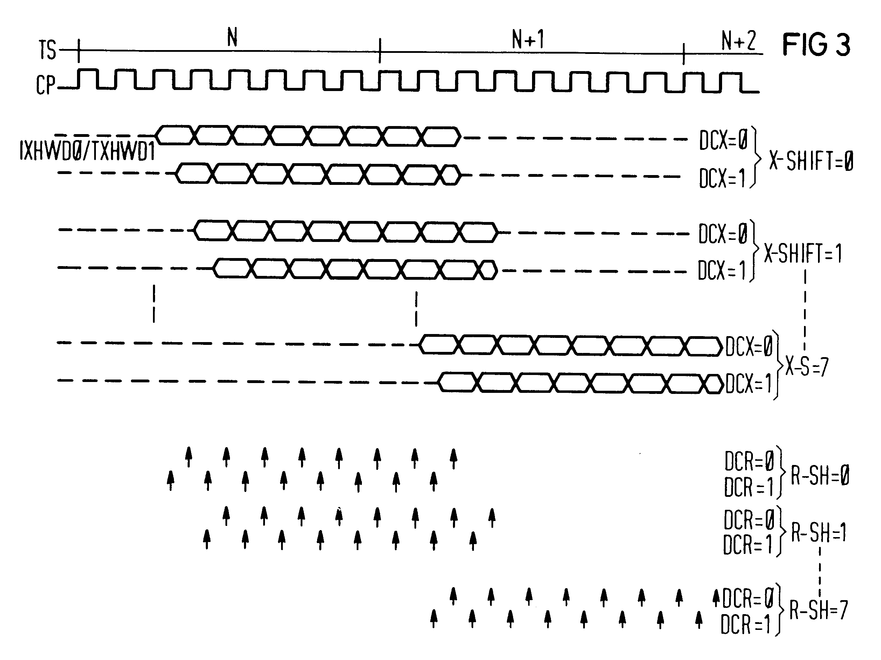

Die Fig. 3 zeigt Pulsdiagramme und Zeichenkombinationen, die für den Informationsaustausch in der beschriebenen Schnittstellenbaugruppe verwendet werden.

In der Fig. 1 ist eine digitale Fernsprechnebenstellenanlage mit drei Schnittstellenbaugruppe SB1, SB2, SBx gezeigt. An die Schnittstellenbaugruppe SB1 sind acht Teilnehmerstellen T0...T7 anschaltbar. An die Schnittstellenbaugruppe SB2 sind acht Verbindungsleitungen unterschiedlicher Art, z. B. Amtsleitungen AU1...AU3 und Querverbindungsleitungen QU1...QU'1, angeschaltet. An die Schnittstellenbaugruppe SBx sind drei Teilnehmerstellen Tx0...Tx3 und vier Verbindungsleitungen AUx...QUxn angeschaltet. Jede der Schnittstellenbaugruppen SB1, SB2, SBx ist über ein entsprechendes Leitungsbündel LB1 bzw. LB2 bzw. LBx mit einem Sprechwegekoppelnetzwerk SN und über ein allen gemeinsames Datenübertragungsleitungsbündel DL mit einer zentralen Steuerung ZS der Nebenstellenanlage verbunden. Über jedes der Leitungsbündel LB1, LB2, LBx sind Sprachinformationen und, wie nachstehend beschrieben, auch andere Daten im Pulscodemodulationsverfahren übertragbar. Der Informationsaustausch zwischen angeschalteten Teilnehmerstellen der Nebenstellenanlage bzw. zwischen angeschalteten Verbindungsleitungsübertragungen bzw. zwischen Teilnehmerstellen und Verbindungsleitungsübertragungen erfolgt über das Sprechwegekoppelnetzwerk SN. Über das Sprechwegekoppelnetzwerk SN sind auch zusätzliche, nicht dargestellte Einrichtungen, wie Zusatzspeicher, Prüfschnittstellen, Dateneinrichtungen usw. sowie ein Tongenerator TG und ein bzw. mehrere MFC-Empfänger CE anschaltbar.

Ferner sind an die Schnittstellenbaugruppen SB1, SB2, SBx nicht nur Teilnehmerleitungen T0, T1, T1x und/oder Verbindungsleitungsübertragungen AU1...QU1, sondern auch Sende- und Empfangseinrichtungen HDP11...HDPXX anschaltbar, die der Umsetzung von beliebigen Dateninformationen in pulscodierte Informationen und umgekehrt dienen, und zwar zum Zwecke des Datenaustausches über das Sprechwegekoppelnetzwerk SN. Die Umsetzung und die Übertragung über das Sprechwegekoppelnetzwerk SN, insbesondere die Belegung der Kanäle erfolgt in Abhängigkeit vom Befehlsaustausch über das zusätzliche Datenübertragungsleitungsbündel DDL′ bzw. DDL″ bzw. DDL‴ mit der peripheren Steuerung, z. B. MP′, und/oder der zentralen Steuerung ZS: Wieviele selbständige Sende-und Empfangseinrichtungen an eine Schnittstellenbaugruppe, z. B. SB1, angeschaltet werden, wird durch die Art und Aufgabe der ausgetauschten Dateninformationen bestimmt.

Der Verbindungsaufbau läuft im Prinzip folgendermaßen ab: Die Schnittstellenbaugruppe SB1, SB2, SBx erhält einen Anreiz, wenn ein Teilnehmer abhebt. Sie verbindet diesen rufenden Teilnehmer über das Sprechwegekoppelnetzwerk SN mit dem Tongenerator, z. B. TG, und mit einem Ziffernempfänger CE. Mit den gewählten Ziffern wird der Verbindungswunsch der zentralen Steuerung ZS mitgeteilt, die die Vollständigkeit einer Kennzahl und die entsprechende Berechtigung der anrufenden Teilnehmerstelle bzw. der ankommend belegten Verbindungsleitungsübertragung prüft. Von der zentralen Steuerung ZS wird wie bei der Verbindungsherstellung zum Tongenerator TG und zum Ziffernempfänger CE auch der weitere Verbindungsaufbau zur anzurufenden Teilnehmerstelle bzw. zur zu belegenden Verbindungsleitungsübertragung durchgeführt. Falls erforderlich, werden Informationen der Schnittstellenbaugruppe, z. B. SB1, in Abhängigkeit von Befehlen der zentralen Steuerung ZS zu einer anderen Schnittstellenbaugruppe, z. B. SB2, über das Datenübertragungsleitungsbündel DL übertragen. Gegebenenfalls werden über das Sprechwegekoppelnetzwerk SN Daten von der einen Schnittstellenbaugruppe SB1 zur anderen Schnittstellenbaugruppe SB2 bzw. über die Verbindungsleitungsübertragungen weitergegeben. Letzteres ist von großer Bedeutung, da nur über diesen Weg in einfacher Weise ohne zusätzliche Verbindungsleitungen ein Datenaustausch möglich ist. Bei der gezeigten Darstellung ist davon ausgegangen, daß den Teilnehmerendstellen bereits Umsetzeinrichtungen für die Umsetzung analoger Informationen in digitale Informationen und umgekehrt (sogenannte CODEC) zugeordnet sind. Die weitere Funktionsanpassung erfolgt in den Schnittstellenbaugruppen SB1, SB2, SBx. Für die Umsetzung von analogen Signalen analoger Teilnehmerstellen bzw. analoger Verbindungsleitungsübertragungen können den Schnittstellenbaugruppen entsprechende Umsetzschaltmittel (CODEC) zugeordnet werden.

Die Übertragung der Sprachinformationen zum Sprechwegekoppelnetzwerk SN erfolgt über eine PCM-Schnittstellenschaltung PIM (Fig. 2). Es wird beispielsweise ein dem Übertragungssystem PCM 30 entsprechendes System verwendet, bei dem die gleichzeitige Übertragung von 32 Gesprächen, z. B. über zwei symmetrische Adernpaare möglich ist. Für jeden der 32 Sprechkreise werden in beiden Richtungen 8000 Abtastwerte pro Sekunde in Form von 8-bit-Codewörtern übertragen. In jeder Richtung müssen also innerhalb von 125 $\mu$s nacheinander 32 Codewörter mit je 8 Bit übertragen werden. Die 32 Codewörter bilden zusammen einen Pulsrahmen. Die Pulsrahmen werden unmittelbar aneinandergereiht übertragen.

Über das zur zentralen Steuerung ZS führende Datenübertragungsleitungsbündel DL werden Informationen in einem Nachrichtenformat mit variabler Datenlänge übertragen, und zwar nach dem Hochpegel-Zeichengabeverfahren HDLC. Das Format der Informationen wird mit der Hochpegeldatenübertragungssteuerung in einen 64-kbit/s-Bitstrom umgesetzt. Das Informationsformat ist in der Länge von 5 bis 32 Byte variabel und enthält in der Regel Adresse, Folgenummer, Prüfzeichen und die eigentliche Nachricht.

Bei den neuen digitalen Vermittlungssystemen ist die Einbringung neuer Dienste, die Erweiterungsfähigkeit der Hardware und Software, die Dezentralisierung der Steuerlogik und die hohe Betriebssicherheit bei einfacher Wartung sowie die Verringerung der Kosten von großer Bedeutung. Die technischen Zielsetzungen sind in diesem Bereich ein wesentlich erhöhtes Maß an Flexibilität und Programmierbarkeit der Betriebszustände, Vorverarbeitung der peripheren Anreize, einfacher modularer Aufbau der Baugruppen und reduzierte Verdrahtung nach außen sowie die Bereitstellung einer leistungsfähigen Schnittstelle zu abgesetzten, nicht zur Anlage gehörenden Einrichtungen und zur zentralen Steuerung. Auf diese Weise soll der unmittelbare Anschluß von digitalen Teilnehmerbaugruppen an ein voll digitalisiertes Netz mit beliebiger Integrierung von Diensten ermöglicht werden.

Die in Fig. 2 gezeigte Schnittstellenbaugruppe enthält als wichtigste Bestandteile eine Schnittstellenschaltung SIU, an die die Teilnehmer, z. B. T1, und/oder Verbindungsleitungsübertragungen, z. B. die Amtsleitungsübertragung AU1 oder die Querverbindungsleitungsübertragung QU1 angeschlossen sind. Über die Verbindungsleitungen zu den Teilnehmerendstellen bzw. zu den Verbindungsleitungsübertragungen und gegebenenfalls zu anderen Peripheriebausteinen wird der Datenaustausch mit der Schnittstellenbaugruppe geführt. In der ersten Rahmenhälfte eines Pulsrahmens werden die Daten von der Schnittstellenbaugruppe SB zum entsprechenden Peripheriebaustein, z. B. zur Teilnehmerstelle, übertragen und in der zweiten Rahmenhälfte werden die im Peripheriebaustein, beispielsweise Teilnehmerstelle oder Verbindungsleitungsübertragung, vorliegenden Daten zur Schnittstellenbaugruppe SB zurückgegeben. Ein zentraler Taktgenerator liefert ein 8 kHz-Signal zur Synchronisierung des Datenaustausches. Die Datenübertragung erfolgt unabhängig vom Takt der Schnittstellenbaugruppe SB immer mit einem 512 kHz-Takt. Es werden synchron Daten in beiden Richtungen ausgetauscht, und zwar jeweils 64 Kbit. Die Signalisierungsdaten werden in 8 bit/Rahmen in beiden Richtungen übertragen. Die Kontrolldaten werden in 1 byte/Rahmen ebenfalls in beiden Richtungen übertragen. Im Schnittstellenbaustein SB werden die jeweils ausgetauschten Daten zwischengespeichert. Hierzu sind pro Übertragungskanal (Sendekanal und Empfangskanal) sowie getrennt für die Signalisierungsinformationen abhängig von der Übertragungsrichtung entsprechende Zwischenspeicher vorgesehen; d. h. ein Empfangsregister zur Zwischenspeicherung der Daten, die im A-Kanal empfangen werden. Das gleiche gilt für die im B-Kanal übertragenen Informationen und ebenso für die empfangenen Signalinformationen sowie für die umgekehrten Übertragungsrichtungen, denen auch jeweils entsprechende getrennte Speicher zugeordnet sind. Hierzu sei noch bemerkt, daß vom Peripheriebaustein, beispielsweise von einer Teilnehmerstelle, kommende Signalisierungsbytes in einem Speicher für die aktuellen Zustände der Peripheriebausteine aufgenommen werden.

In einem zusätzlichen Speicher LLS ist jeweils der vorhergehend, zuletzt festgestellte Zustand noch vorhanden und ein Vergleicher stellt durch Vergleich Zustandsveränderungen an der Teilnehmerstelle bzw. in der angeschalteten Verbindungsleitungsübertragung fest. Die Zustandsänderung wird in dem Zustandsspeicher LLS gekennzeichnet. Eine den Zustandsspeicher LLS enthaltende LL-Logic (last look logic) überprüft laufend den Zustand der Speicher LLS, LLD, die die Zustandsänderungen kennzeichnen. Jedem Ausgang zu einem Peripheriebaustein ist ein derartiger Zustandsspeicher zugeordnet. Wenn sich in einem solchen Speicher mindestens ein Bit ändert, wird in dem Zustandsspeicher das zugeordnete Bit gesetzt und diese Änderung durch interne Steuersignale internen Steuerschaltmitteln SM der Schnittstellenbaugruppe SB mitgeteilt.

Die PCM-Schnittstellenschaltung PIM verbindet die Schnittstellenbaugruppe SB mit dem Sprechwegekoppelnetzwerk. Diese PCM-Schnittstellenschaltung PIM bewirkt in der Empfangsrichtung die Übernahme der seriellen Informationen mit der programmierten Taktflanke, ferner erfolgt die Serien-/Parallel-Umsetzung der ankommenden Daten und das Zwischenspeichern des Informationsbytes in einem entsprechenden Pufferspeicher. In der Senderichtung erfolgt eine Parallel-/Serien-Umsetzung der Informationen, eine Ausgabe der Daten mit der programmierten Taktflanke sowie das Erzeugen der Kontrollsignale zur Ansteuerung externer Treiberstufen und das Schalten der Ausgangsstufen.

Ferner ist ein Anpassungsspeicher CAM vorgesehen, der die Übertragung der empfangenen PCM-Informationen zwischen dem Sprechwegekoppelnetzwerk und den Teilnehmer-/Verbindungsleitungsübertragungsanschlüssen steuert. Der Speicherumfang beträgt $4 \times 8$ Byte und betrifft die Senderichtung für Kanal A mit Zwischenspeicher CAM, die Senderichtung B mit Zwischenspeicher CAM1, die Empfangsrichtung A mit Zwischenspeicher CAM2 und die Empfangsrichtung B mit Zwischenspeicher CAM3. Jedem der an der Schnittstellenschaltung SIU angeschalteten Peripheriebausteine, z. B. Teilnehmer, ist eine entsprechende CAM-Zeile zugeordnet. Die Datenübertragung wird durch Eintragen des Zeitschlitzes und des PCM-Kanals unter der Adresse des zugeordneten Teilnehmers im entsprechenden Zwischenspeicher CAM gekennzeichnet. In dem jeweiligen Zwischenspeicher CAM kann die Datenübertragung zwischen der peripheren Steuerung MP und den Übertragungskanälen programmiert werden. Jeder Zwischenspeicher CAM wird in jedem Zeitschlitz vollständig ausgelesen und ausgewertet. Die Informationsübertragung in beiden Richtungen wird in Abhängigkeit davon durchgeführt.

Zeitschaltmittel ZM erzeugen alle aus einem Grundtakt zur Steuerung des PCM-Systems abzuleitenden Takte. Außerdem werden Takt-und Übernahmesignale für die Schnittstellen zu den Peripheriebausteinen und zum Sprechwegekoppelnetzwerk erzeugt. Die nach außen zu externen Peripheriebausteinen EP führenden Leitungen deuten an, daß die erzeugten Takte auch zu deren Steuerung zu verwenden sind. Im Speicher MO-A wird die Art des Austausches von Informationen mit variabler Datenlänge sowie die Verwendungsweise eines Speichers FXP festgelegt.

Das interne Datenübertragungsleitungsbündel PBC-B verbindet alle Funktionsteile des PCM-Synchronblockes der Schnittstellenbaugruppe SB. Die Schnittstellen zum Asynchronteil bilden der Speicher SXP und ein Speicher FSP sowie eine Umsetzeinrichtung BIR. Das interne Datenübertragungsleitungsbündel PBC-B wird im Zeitmultiplex betrieben. Ind er einen Zeitschlitzhälfte wird der Synchronverkehr, d. h. die PCM-Informationsübertragung und in der anderen Zeitschlitzhälfte der Asynchronverkehr abgewickelt. Auf diese Weise wird intern ein optimaler Datendurchsatz erreicht, ohne daß der Zugriff von den Rechnerschnittstellen beeinflußt wird.

Die über das Datenübertragungsleitungsbündel DL in einem Nachrichtenformat mit variabler Datenlänge (HDLC-Prozedur) zur zentralen Steuerung übertragenen Daten gehören zu dem sogenannten Asynchronteil. Die entsprechende Sende- und Empfangseinrichtung HDP dient dem Austausch von Signalisierungs- und Steuerinformationen im entsprechenden Nachrichtenformat über eine serielle, entsprechende Schnittstelle. Die Empfangseinrichtung hat folgende Aufgaben: Erkennung der Markierungskennzeichen; Erkennung einer individuellen Adresse; eine Nullstellfunktion; Seriel-/Parallel-Umsetzung; Abspeichern der entsprechenden Befehle in einem Empfangs-Befehlsspeicher RHCR; Abspeichern des Anwenderbefehls im Empfangsbefehlsspeicher RPCR; Zwischenspeichern weiterer Informationsbytes im Empfangshaltespeicher RHR; Redundanzprüfung; Rahmenprüfung; Umschalten zwischen den PCM-Übertragungswegen 0 und 1 im normalen Kanalbetrieb. Die Sendeeinrichtung hat folgende Aufgaben: Selbständige Steuerung des Übertragungsvorganges; Nullstellfunktion; Parallel-/Serien-Umsetzung; selbsttätige Anforderung der Informationen von den verschiedenen internen Informationsquellen; Sendung des Inhaltes des Übertragungsbefehlsregisters der betreffenden Sendeeinrichtung, wenn der Sendevorgang von der internen Steuerung veranlaßt wurde; Sendung des Inhaltes des Sendebefehlsspeichers XPCR als Anwenderbefehl; Einfügen eines Blockprüfzeichens CRC am Ende des Informationsrahmens und bei normalem Kanalbetrieb das Senden über den ausgewählten PCM-Übertragungsweg 0 der 1.

Ein Speicher MSP der internen Steuerung kontrolliert die logische Ebene der Prozedur für die Übertragung von Informationen mit variabler Datenlänge (HDLC-Prozedur) im Sinne der Verteilung der empfangenen Informationspakete und der Zusammenstellung der an die zentrale Steuerung zu übertragenden Informationspakete. In der Sende- und Empfangseinrichtung HDP sind die Anwenderbefehle auszuwerten, ist das Anschalten der angeforderten Informationsquelle an den Übertragungspufferspeicher durchzuführen, ist das Weiterschalten der ankommenden Informationen im Empfangspufferspeicher an die Informationssenke durchzuführen, sind die Sende- und Quittungssignale zu erzeugen bzw. auszuwerten, sind die Funktionen einer Steuerung mit vielen Ausgängen für die Übertragung durchzuführen, ist die Datenübergabe an die periphere Steuerung durchzuführen und ist die Datenübergabe an den Synchronteil der Sende- und Empfangseinrichtung durch Austausch von Steuersignalen durchzuführen.

Ferner ist in der logischen Ebene die Auswertung der Befehle der Sende- und Empfangseinrichtung HDP notwendig, ist das Starten des Sendevorgangs erforderlich und ist die Zusammenstellung des Antwortpaketes einschließlich des Informationsbytes notwendig, welches die Anwenderantwort enthält.

Mit einer Schnittstellenschaltung MI erfolgt die Ansteuerung der peripheren Steuerung MP und die Zwischenspeicherung für die über die entsprechende Datenübertragungsleitung MD zu übertragenden Informationen. Die Steuerlogik für dieses Datenübertragungsleitungsbündel MD verwendet die Signale von der Datenübertragungsleitung der peripheren Steuerung MP zur Ansteuerung der internen Funktionsblöcke. Die Freigabe erfolgt durch ein normalerweise aus einer Adreßcodierung gewonnenes Signal CS; mit einem Signal WR übergibt die periphere Steuerung MP Informationen an die Schnittstellenschaltung MI, während mit einem Signal RD die Informationen abgerufen werden.

Die Speicher der peripheren Steuerung MP sind mit direkter Ansteuerung zugänglich. Durch Programmierung der Befehlsspeicher wird ein Teil des funktionellen Verhaltens der Schnittstellenbaugruppe SB festgelegt. Über die Zustandsspeicher werden Informationen an die periphere Steuerung MP zurückgemeldet. Der Adressenspeicher dient der Zwischenspeicherung von Adreßinformationen. Die vorgenannten Speicher sind mit SP1 bzw. SP2 bezeichnet.

Durch Übergabe von Befehlen in ein Register MPC des Speicher SP1 werden die Funktionen für die zwischen der internen Steuerung und der Steuerung der Sende- und Empfangseinrichtung HDP auszutauschenden Informationen gesteuert. Durch Setzen einzelner Bits in dem Register MPC werden entsprechende Funktionsabläufe der Steuerschaltmittel SM eingeleitet. Die eingeleiteten Steuervorgänge können durch einen Zurücksetzbefehl unterbrochen werden. Ein Registerteil TRC des Speichers SP1 dient der Durchschaltung der 64 kbit-Kanäle zur Schnittstellenschaltung MI der internen Steuerung. Im Speicher SP2 ist in einem Zustandsregister STATUS 1 eine Kennzeichnung für die Ursache der Unterbrechung der internen Steuerung gespeichert. Ein entsprechend gesetztes Bit steuert die Unterbrechung der internen Steuerung. Durch das Lesen dieses Zustandsregisters STATUS 1 werden die Zustandsbits abhängig von den der internen Steuerung übergebenen Informationen individuell zurückgesetzt. Durch ein zweites Zustandsregister STATUS 2 des Speichers SP2 können einzelne Bits des Zustandsregisters STATUS 1 maskiert werden. Im Zustandsregister STATUS 2 sind Informationen abgelegt, auf die die interne Steuerung bei Bedarf ohne Aufforderungsunterbrechung zugreifen kann. Der entsprechende Speicherinhalt wird durch die Zustände des Umsetzers BIR zwischen dem internen Datenübertragungsleitungsbündel PBC-B und dem Datenübertragungsleitungsbündel für Informationen der zentralen Steuerung, der vorgesehenen Sendeschaltmittel und des Sendespeichers FXP beeinflußt. Ein Registerteil EDR des Speichers SP2 beinhaltet Daten über Fehlerursachen und dient der näheren Definierung des im Zustandsregister STATUS 1 gesetzten Bits für die Fehlerkennzeichnung. Nach einem Auslesen des Registers EDR werden alle Bits zurückgesetzt. Eine aus einem Register TAR des Speichers SP2 ausgelesene Information dient der Durchschaltung von kBit-Kanälen zwischen der Schnittstellenschaltung MI für die interne Steuerung und den Teilnehmer-/Verbindungsleitungsanschlüssen bzw. dem Sprechwegekoppelnetzwerk SN:

Ein Register ABR des Speichers SP1 dient der Aufnahme indirekter Adressen, während ein Register ADR des Speichers SP2 der Aufnahme der der Schnittstellenbaugruppe SB zugeordneten spezifischen Adresse dient.

Der Sendespeicher FXP ist ein 16-Byte-Flipflopspeicher und dient im Normalbetrieb der Zwischenspeicherung von Informationspaketen, die für die interne Steuerung bereitzustellen sind und von dieser über die Sende- und Empfangseinrichtung HDP abgerufen werden. Diese Art von Informationen können als "Direktinformation" bezeichnet werden und werden über das Datenübertragungsleitungsbündel DL in einem

6

Nachrichtenformat mit variabler Datenlänge (HDLC-Prozedur) übertragen. Diese Informationen werden abhängig von der Einstellung eines Zustandsregisters MO-A entweder von der Zustandslogik LL-Logic über das interne Datenübertragungsleitungsbündel PBC-B eingeschrieben oder von der internen Steuerung als Informationsblock mit direkter Adressierung zur Verfügung gestellt. Werden in Abhängigkeit vom Programm der internen Steuerung 64 kBaud-Kanäle zwischen dem Sprechwegekoppelnetzwerk SN und der Schnittstellenschaltung PIM der internen Steuerung durchgeschaltet, so dient der Sendespeicher FXP der Zwischenspeicherung der anfallenden Programmunterbrechungsadressen, bevor diese über das Sende-Adressenregister TAR des Speichers SP2 an die periphere Steuerung MP weitergegeben werden. In diesem Betriebsfall steht der Sendespeicher FXP nicht für die Pufferung von Sendedaten zur Verfügung.

Im doppeltgerichteten Speicher FSP für Steuerdaten können bis zu 16 Nutzbytes zwischengespeichert werden. Dieser Speicher FSP wird direkt adressiert und dient dem Informationsaustausch zwischen der zentralen Steuerung und der internen Steuerung über die Sende- und Empfangseinrichtung HDP und das Datenübertragungsleitungsbündel DL bzw. mit den an das interne Datenübertragungsleitungsbündel PBC-B angeschalteten Einrichtungen.

Über den doppeltgerichteten Speicher FSP für Steuerinformationen ist der Austausch von Informationen möglich. Die Steuerung dieses Speichers wird von der der internen Steuerung zugeordneten Steuereinrichtung MSP übernommen. Die Übergabe von Steuerinformationen von und zu dem Speicher FSP erfolgt mittels des Zustandsregisters STATUS 1 mit einem Unterbrechungsbefehl bzw. mit einem Befehl des Registers MPC bzw. mit einem Befehl bzw. einem Rückkriterium der zentralen Steuerung oder mit internen Steuersignalen der Schnittstellenbaugruppe SB. Die Schnittstellenschaltung MI der peripheren Steuerung MP steuert die zum PCM-Zeitraster asynchrone Informationsübertragung über das interne Datenübertragungsleitungsbündel PBC-B und erfüllt dabei folgende Aufgaben:
Auswerten der Schnittstellenbaugruppeninformationen, die Anwenderbefehle betreffen sowie das Verteilen der im doppeltgerichteten Speicher FSP zwischengespeicherten Informationen der Schnittstellenbaugruppe, ferner das Abspeichern der pro Schnittstellenbaugruppenbefehl angeforderten internen Informationen in dem doppeltgerichteten Speicher FSP, die Steuerung der Datenübertragung bei indirekter Adressierung, die Steuerung der Zustandslogik (LL-Logic), das Abspeichern der Signalisierungsinformationen im Sendespeicher FXP, die Aufnahme der Signalisierungsinformationen ohne Zwischenspeicherung und zuletzt die Koordinierung der einzelnen Übertragungsarten (PCM-Verfahren und HDLC-Prozedur) mittels einer Prioritätslogik.

Ein asynchroner Informationsaustausch ist zwischen folgenden Einrichtungen möglich:

| Empfänger / Sender | FXP | FSP | SIU | CAM | DC |
|---|---|---|---|---|---|
| HDP | | | x | | x |
| FSP | | | x | x | x |
| SIU | x | x | | | |
| CAM | | x | | | |
| DC | | x | | | |

Der Umsetzer BIR zwischen dem internen Datenübertragungsleitungsbündel PBC-B und dem Datenübertragungsleitungsbündel MD (Fig. 1) der peripheren Steuerung MP dient als Schnittstelleninformationszwischenspeicher mit indirekter Adressierung. Dieser Umsetzer BIR wird von der Schnittstelle der peripheren Steuerung über direkte Adressierung erreicht. Der Informationsaustausch zwischen dem Umsetzer BIR und einem Speicher, in dem die Ziele bzw. die Ursprünge gespeichert sind, wird von den Steuerschaltmitteln SM veranlaßt und gesteuert.

Das funktionelle Verhalten der Schnittstellenbaugruppe SB wird zum einen bestimmt durch die Initialisierung und die statische Einstellung und zum anderen durch die Übergabe von Parameteradressen und Steuerbefehlen, die von der peripheren Steuerung MP selbst bzw. von der zentralen Steuerung über die serielle Schnittstelle MI für die Informationen mit den Nachrichtenformat mit variabler Datenlänge übergeben werden. Für die Übernahme von Informationen über das Datenübertragungsleitungsbündel DL ist die Schnittstellenbaugruppenadresse, die Schnittstellenbaugruppenart und die Steuerart zu kennzeichnen und

7

sind ferner die Eigenschaften der Sende- und Empfangseinrichtung HDP, beispielsweise das Teilerverhältnis des Informationstaktes und der Schnittstellenanschluß zu kennzeichnen. Die entsprechenden Vorgaben werden über die Schnittstelle der peripheren Steuerung vor der Inbetriebnahme der Schnittstellenbaugruppe vorgenommen. Ist die periphere Steuerung angeschlossen, so erfolgt die Einstellung durch Übergabe der entsprechenden Informationen seitens der internen Steuerung. Vor der Inbetriebnahme sind dann noch eine Reihe von Anweisungen in den vorhandenen Registern aufzunehmen. Diese Anweisungen dienen der statischen Einstellung und ändern sich im Normalfall während des Betriebes nicht. Zu den Anweisungen gehören beispielsweise die Kennzeichnung der Art des PCM-Systems, die Kennzeichnung der zeitlichen Lage des Strobe für Signalisierung, die Kennzeichnung der Art und Periode der Zustandsbearbeitung der LL-LOGIC, die Kennzeichnung des Zeitsteuertaktes der PCM-Sprechwegenanschlüsse und so weiter. Ferner gehört zu den Anweisungen die Kennzeichnung der Steuerung der $16 \times 64$ kbit-Kanäle zwischen Teilnehmer und Sprechwegekoppelnetzwerk SN. Diese sind im Anpassungsspeicher CAM gespeichert.

Mit den vorgenannten Einstellungen ist die Schnittstellenbaugruppe SB in der Lage, die Steuerung der Sprach-, Informations-und Signalisierungswege durchzuführen. Dabei werden die notwendigen Parameterbefehle und Steuerbefehle der Schnittstellenbaugruppe SB in Form von Anwenderbefehlen von der zentralen Steuerung geliefert. Zum Zwecke einer funktionellen Erweiterung ist der Anschluß einer zusätzlichen Steuerung in Form eines Mikrocomputers an die parallele Schnittstelle EP möglich. Die periphere Steuerung MP, die auch als Mikrocomputer ausgeführt ist, hat die Möglichkeit, die Schnittstellenbaugruppe über direkt adressierbare Register zu steuern bzw. Zustände abzufragen und damit folgende interne Abläufe einzuleiten bzw. zu beeinflussen: Interruptgesteuerter Zugriff auf Zustandsdaten (LL-Logic), interruptgesteuerter Zugriff auf sprechwege- und teilnehmerseitige 64 kbit-Kanäle, der Austausch von Informationspaketen zwischen der Schnittstellenbaugruppe SB und der zentralen Steuerung sowie die Erweiterung der logischen Ebene des Datenaustausches imi Nachrichtenformat mit variabler Datenlänge (HDLC-Prozedur).

Es handelt sich bei der beschriebenen Schnittstellenbaugruppe SB also um eine Baugruppe, welcher eine Gruppe von Teilnehmern bzw. eine Gruppe von Leitungsübertragungen bzw. eine kombinierte Gruppe von Teilnehmern und Leitungsübertragungen zugeordnet ist. In Abhängigkeit von der Größe der Anlage sind eine entsprechende Vielzahl solcher Schnittstellenbaugruppen vorhanden. Diese Schnittstellenbaugruppen sind entweder über Gruppenkoppler - bei größeren Anlagen - bzw. dirket - bei kleineren Anlagen - mit einem Sprechwegekoppelnetzwerk SN, wie in FIG 1 dargestellt, verbunden. Die Schnittstellenbaugruppe SB ist sowohl mit dem Sprechwegekoppelnetzwerk über entsprechende Leitungen für die Übertragung der Sprachinformationen im Pulscodemodulationsverfahren und die Übertragung von sonstigen Daten im Pulscodemodulationsverfahren als auch mit einem Datenübertragungsleitungsbündel DL, welches zur zentralen Steuerung ZS führt, verbunden. Die Informationen über das Datenübertragungsleitungsbündel DL werden in einem Nachrichtenformat mit variabler Datenlänge (HDLC-Prozdur) übertragen. Das Nachrichtenformat ist in der Länge von 5 bis 64 byte variabel und enthält Adresse, Folgenummer, Prüfzeichen und die eigentliche Nachricht. Die Übertragung der Informationen zu den Teilnehmerendstellen und zu den Verbindungsleitungsübertragungen erfolgt in Abhängigkeit von Steuerbefehlen der zentralen Steuerung ZS und in Abhängigkeit von einer der Schnittstellenbaugruppe SB zugeordneten, über das interne Datenübertragungsleitungsbündel PBC-B und über das zusätzlich zugeordnete Datenübertragungsleitungsbündel MD angeschalteten peripheren Steuerung MP. Die periphere Steuerung MP besteht in der Regel aus einem Mikrocomputer, z.B. Intel 8086. Die periphere Steuerung MP wird über die zugeordnete Schnittstellenschaltung MI und eine Treiberschaltung MDD mit dem der internen Steuerung MP zugeordneten Datenübertragungsleitungsbündel verbunden.

Die Schnittstellenbaugruppe SB weist Zeit- und Steuerschaltmittel ZM, SM für das pulscodierte Senden und Empfangen von Sprachinformationen zum Sprechwegekoppelnetzwerk SN bzw. vom Sprechwegekoppelnetzwerk SN über die PCM-Schnittstellenschaltung PIM auf, die ebenfalls mit dem internen Datenübertragunsleitungsbündel PBC-B in Verbindung steht.

Der Schnittstellenbaugruppe SB ist eine dem Datenübertragungsleitungsbündel DL zugeordnete Sende- und Empfangseinrichtung HDP für den Empfang und das Senden von Informationen zwischen der zentralen Steuerung und der peripheren Steuerung MP in einem Nachrichtenformat mit variabler Datenlänge (HDLC-Prozedur) zugeordnet, welche ebenfalls mit dem internen Datenübertragungsleitungsbündel PBC-B in Verbindung steht.

Die pulscodiert übertragenen Daten, die über das Sprechwegekoppelnetzwerk SN gesendet bzw. empfangen werden, sind Daten, die einem Rechner bzw. einem Auswertegerät zugeführt werden können. Bei diesen Daten handelt es sich beispielsweise um Ferndaten, die Aussagen, über Störungen, Prüfungen, Feuer und sonstige Überwachungen betreffen.

Der Austausch der vorstehend genannten Informationen im normalen Kanalbetrieb über die im Pulscodemodulationsverfahren betriebenen Kanäle erfolgt in zwei frei programmierbaren Zeitschlitzen, über einen der beiden PCM-Übertragungswege A bzw. B. In einem solchen Falle werden die Informationen an den zu der Datenübertragungsleitung DL führenden Anschlüssen ungültig. Für die Übertragung der Informationen über die Sprechwege sind die Zeit- und Steuerschaltmittel ZM, SM ausgenutzt, die die Auswahl eines belegbaren PCM-Kanals vornehmen. Über den Speicher MO-A wird in Zusammenarbeit mit den Steuerschaltmitteln SM und mit in den Zeitschaltmitteln ZM vorhandenen Kanalspeichern CHR1, CHR2 in den programmierten Zeitschlitzen eine Freikennung erkannt. Ist dies der Fall, so wird die Sende- und Empfangseinrichtung HDP für die entsprechende Belegung des gewählten PCM-Kanals programmiert. Die Belegung bleibt solange bestehen, bis eine Freigabe veranlaßt wird. Die Belegung eines freien Kanals durch die Sende- und Empfangseinrichtung HDP wird von der peripheren Steuerung MP veranlaßt. Für die Belegung eines freien Kanals müssen zwei beliebige Zeitschlitze in den Kanalspeichern CHR1 und CHR2 mittels indirekter Adressierung eingetragen werden. Ist dies geschehen, so werden von der PCM-Schnittstelle PIM die ankommenden Informationen als solche erkannt, die als variable Daten von der Sende- und Empfangseinrichtung HDP zu verarbeiten sind. Entsprechend wird auch die Übertragung der Informationen mit variablen Datenlängen in bestimmten Zeitschlitzen bestimmter Länge im ausgewählten Kanal und in aufeinanderfolgenden Rahmen übertragen. Die Datenübertragungsgeschwindigkeitbeträgt dabei maximal 2 × 64 Kbit/Sekunde pro Richtung.

Anstelle der programmierbaren Zeitschlitze kann auch ein Betrieb mit je einem Empfangs- und einem Ende-Zeitschlitz gewählt werden. Bei dieser Betriebsart wird der in einem der Kanalspeicher, z.B. CHR1, eingetragene Wert als Empfangszeitschlitz und der im anderen Kanalspeicher CHR2 eingetragene Wert als Sendezeitschlitz interpretiert. Es werden nur die im Empfangs-Zeitschlitz im gewählten PCM-Kanal ankommenden Informationen zur Sende- und Empfangseinrichtung HDP durchgeschaltet und nur im Sende-Zeitschlitz werden entsprechende Informationen, die von der Sende- und Empfangseinrichtung HDP kommen, ausgegeben. In diesem Falle beträgt die Datenübertragungsgeschwindigkeit maximal 1 × 64 Kbit/Sekunde pro Richtung.

Wird der Kanalbetrieb im Zeitschlitz N programmiert, so kann die zeitliche Lage des gesendeten und empfangenen Informationsstromes sowie der Übernahmeflanken abhängig vom Binärcode dreier vorhandener Bits X-SHIFT bzw. R-SHIFT vorgenommen werden. In diesem Zusammenhang wird auf die FIG 3 verwiesen.

Die Schnittstellenbaugruppe SB ist konzipiert als lokale Steuerung, welche von der übergeordneten Steuerung MP kontrolliert wird. Alle Funktionen laufen in Zusammenarbeit mit dieser Steuerung MP ab, die einerseits die Aufgaben der peripheren Vorverarbeitung von Informationen übernimmt, andererseits der Aufweitung der Ablaufverfahren auf ein volles Informationspaket für die Sende- und Empfangseinrichtung HDP dient. Die Informationsübertragung erfolgt über die bereits genannten Datenübertragungsleitungen MD und PBC-B. Nur unbekannte Befehle werden zur Bearbeitung der zentralen Steuerung der Fernsprechanlage, insbesondere Fernsprechnebenstellenanlage, übergeben. Der Standardrahmen eines Nachrichtenformats mit variabler Datenlänge besteht aus Startkennzeichen, 8-bit-Steuerfeld, Informationsfeld, 16-bit-CRC-Feld und Endkennzeichen.

Wird angenommen, daß Informationen über die Sende- und Empfangseinrichtung HDP einem PCM-Kanal des über das Sprechwegekoppelnetzwerk geführten Sprechweges geführt werden muß, so werden entsprechende Vorbereitungssignale für die Vorbereitung der Belegung eines freien Kanals erzeugt. Als Reaktion auf diese Befehle werden die schnittstellenbaugruppeninternen Daten im doppeltgerichteten Speicher FSP abgespeichert und zum Senden bereitgestellt. Das Informationsfeld dieser Befehle enthält jeweils ein Byte mit dem Operationscode und der Ursprungsadresse. Zur Vorbereitung der Belegung, z.B. des Kanals B, wird die Zeitschlitzzuordnung kontrolliert und werden die Speicher CAM1 (Empfang) und CAM2 (Senden) des Anpassungsspeichers CAM für den belegenden B-Kanal-Teilnehmer gelesen; diese Informationen werden im Speicher FSP aufgenommen. Anschließend wird die Einstellung der internen Speicher und Register kontrolliert.

Mit einem Vorbereitungssignal wird ein Signalisierungsspeicher kontrolliert und mit einem Befehl gezielt das ankommende Signalbyte des den Kanal belegenden Teilnehmers ebenfalls im doppeltgerichteten Speicher FSP gespeichert. Ferner wird die Zeitschlitzzuordnung kontrolliert, indem die Speicher CAM1 (Empfang) und CAM2 (Senden) für die durch den bezeichneten A-Kanal-Beleger eingestellte Verbindung gelesen und die entsprechenden Daten ebenfalls in den doppeltgerichteten Speicher FSP aufgenommen werden. Die empfangenen Informationen enthalten einen Befehl und ein Informationsfeld, bestehend aus 1 bis 16 Bytes, welche im Speicher FSP gespeichert werden. Durch einen entsprechenden Befehl der peripheren Steuerung MP wird ein Ablauf ausgelöst, bei dem die Daten von dem doppeltgerichteten Speicher FSP an das eigentliche Ziel übertragen werden. Beim Empfang peripherer Befehls-Vorbereitungssteuerdaten werden die Kontrolldaten aus den Peripheriebausteinen erneut ausgelesen. Abhängig vom

9

Kontroll-Wort wird eine definierte Anzahl der von dem Peripheriebaustein zurückgesendeten Einstelldaten im Speicher FSP zwischengespeichert. Nach Abschluß dieses Vorganges befindet sich im Speicher FSP das gespiegelte Kontroll-Wort und abhängig von diesem weitere zwei, sechs, zehn oder vierzehn Datenbytes. Die Zustandslogik LL-LOGIC ist auf einen auswählbaren Ausgangswert zurückzusetzen. Die Bytes, für ein oder mehrere der Speicher oder Register bestimmt sind, werden in einer Meldung zusammengefaßt.

Beim Aufbau einer Verbindung für einen A-Kanal-Teilnehmer kann die Länge des Datenfeldes variabel zwischen 2 bis 14 Bytes liegen. Das erste Datenbyte wird in die bezeichnete Adresse des Speichers CAM1 (Empfang) geschrieben, das zweite Byte in den Speicher CAM2 des Anpassungsspeichers CAM. Weitere Bytes werden an den Peripheriebaustein als Einstelldaten gesendet.

Wie aus den Figuren 1 und 2 hervorgeht und vorstehend beschrieben ist, werden Sende- und Empfangseinrichtung HDP11...HDPXX wie Teilnehmerleitungen T0, T1, T1x und/oder Verbindungsleitungsübertragungen AU1...QU1 angeschaltet. Deren Anzahl ist abhängig von den zu erfüllenden Aufgaben. So können über eine solche Sende- und Empfangseinrichtungen, z. B. HDP11, zusätzliche Dateninformationen zu einer Teilnehmerstelle über einen parallel aufgebauten Übertragungsweg des Sprechwegekoppelnetzwerkes SN, z. B. zur Einstellung von Datenendgeräten, gegeben werden. Die Einstellung kann dabei sowohl eine Signalsteuerung als auch eine beliebige optische Wiedergabe bewirken. Mehrere Sende- und Empfangseinrichtungen sind erforderlich, wenn die zu übertragende Datenmenge ein maximal mögliches Datenpaket von 64 kByte übertrifft oder wenn für mehrere Teilnehmerstellen bzw. Verbindungsleitungsübertragungen solche Dateninformationen zu übertragen sind.

Über die zusätzlichen Datenübertragungsleitungsbündel DDL′, DDL″, DDL‴ und die Ansteuerschaltung MDC sowie die periphere Steuerung MP wird der Informationsaustausch und die Umsetzung der beliebigen Dateninformationen in pulscodierte Informationen und umgekehrt gesteuert.

Die Sende- und Empfangseinrichtungen, z. B. HDP11, sind für die Informationswiedergabe bzw. -eingabe in nicht dargestellter Weise mit entsprechenden Endgeräten verbunden.

Die Funktion und Steuerung der Sende- und Empfangseinrichtungen HDP11...HDPXX, die wie Teilnehmerstellen und Verbindungsleitungsübertragungen an die Schnittstellenbaugruppen SB1, SB2, SBx angeschaltet sind, entspricht der Funktion und Steuerung der Sende- und Empfangseinrichtung HDP der Schnittstellenbaugruppen SB1, SB2, SBx. Auf diese Weise erfolgt in jedem Fall, d. h. sowohl bei an einer Schnittstellenbaugruppe, z. B. SB1, als auch an einer ausschließlich mit Sende- und Empfangseinrichtungen verbundenen Schnittstellenbaugruppe, SBx, eintreffenden Anrufen aus einer anderen Anlage über eine Verbindungsleitung und die eigene bzw. eine andere Schnittstellenbaugruppe, z. B. SB2, die Durchkoppelung über das Sprechwegekoppelnetzwerk SN unter Zuhilfenahme der peripheren und/oder der zentralen Steuerung, z. B. MP‴ und/oder ZS. Mittels entsprechender Kennzeichnung in den Datenpaketen erfolgt die Anschaltung einer Sende- und Empfangseinrichtung, z. B. zum Empfangen und/oder zum Senden von Datenpaketen.

Sobald die periphere bzw. die zentrale Steuerung MP bzw. ZS eine Information darüber erhält, daß Datenpakete eintreffen und eine Sende- und Empfangseinrichtung anzuschalten ist, z. B. HDPX1 von SBx, wird die Zieladresse, z. B. der Teilnehmeranschluß T0, an der Schnittstellenbaugruppe SB1 festgestellt. Jetzt wird eine weitere Sende- und Empfangseinrichtung, z. B. HDPX2, der Schnittstellenbaugruppe SBx belegt, und diese wird über das Sprechwegekoppelnetzwerk SN zum Teilnehmeranschluß T0 über die Schnittstellenbaugruppe SB1 für die Weiterübertragung der Daten in entsprechend umgesetzter Form durchgeschaltet. So dienen die Sende- und Empfangseinrichtungen HDP11...HDPXX, gleich welcher Schnittstellenbaugruppe SB1, SB2, SBx sie angehören, beliebig als Wiedergabe- und auch als Zwischenspeicherstelle für empfangene bzw. zu sendende Datenpakete sowie den erforderlichen Umsetzungen. Über einen einzigen hergestellten Sprechweg können bei einer Schnittstellenbaugruppe, z. B. SBx, gleichzeitig für drei verschiedene Ziele Datenpakete übertragen werden, da z. B. bei Anfangsbelegung der Sende- und Empfangseinrichtung HDPX1 drei weitere Sende- und Empfangseinrichtungen HDPX2, HDPX3, HDPXX für die Zuschaltung der anderen Ziele dienen. Die Datenpakete kommen der Reihe nach an und gehen nur zu der Datenendeinrichtung, die auch im Datenpaket adressiert ist. Somit ist auch ein Dialog mit einer Datenzentrale möglich.

**Patentansprüche**

1.   Schaltungsanordnung für eine Fernmeldeanlage, insbesondere Fernsprechnebenstellenanlage, mit Teilnehmer- und Leitungsübertragungsgruppen, wobei die jeweiligen Gruppen und die kombinierten Teilnehmer-/Leitungsübertragungsgruppen über jeweils eine Schnittstellenbaugruppe (SB1, SB2, SBx) solcher Gruppe sowohl mit dem Sprechwegekoppelnetzwerk (SN) als auch über ein Datenübertragungsleitungsbündel (DL) mit einer für die Verbindungswegeherstellung der ankommend bzw. abgehend belegbaren Teilnehmer- bzw. Verbindungsleitungen vorgesehenen zentralen Steuerung (ZS) in Verbindung stehen und wobei die Informationen über das Sprechwegekoppelnetzwerk (SN) im Pulscodemodulationsverfahren und die Informationen über das Datenübertragungsleitungsbündel (DL) in einem Nachrichtenformat mit variabler Datenlänge (HDLC-Prozedur) übertragen werden und wobei ferner jeder Schnittstellenbaugruppe (SB1, SB2, SBx) eine Schnittstellenschaltung (SIU) zugeordnet ist, die Teilnehmer- und/oder Leitungsübertragungsanschlüsse zum Senden und Empfangen von pulscodemodulierten Informationen aufweist, und wobei an eine Schnittstellenbaugruppe (SB1, SB2, SBx) eine bzw. mehrere Sende- und Empfangseinrichtungen (HDP11 bis HDPXX), die auch zum Senden und Empfangen von Informationen in einem Nachrichtenformat mit variabler Datenlänge dienen, derart anschaltbar sind, daß ein Austausch von derartigen Informationen in Abhängigkeit von Steuerbefehlen der zentralen Steuerung (ZS) über das Sprechwegekoppelnetzwerk (SN) mit beliebigen Gegenstellen erfolgt,

**dadurch gekennzeichnet,**

daß die genannten Sende- und Empfangseinrichtungen (HDP11 bis HDPXX) an Teilnehmer- und/oder Leitungsübertragungsanschlüsse der Schnittstellenschaltungen (SIU) angeschlossen sind, und daß der genannte Austausch von Informationen in einem Nachrichtenformat mit variabler Datenlänge auch in Abhängigkeit von Steuerbefehlen einer jeweils einer Schnittstellenbaugruppe zugeordneten peripheren Steuerung (MP) erfolgt, die über ein schnittstellenbaugruppeninternes Datenübertragungsleitungsbündel (PBC-B) mit der Schnittstellenschaltung (SIU), mit dem Sprechwegekoppelnetzwerk (SN) und mit dem Datenübertragungsleitungsbündel (DL) in Verbindung steht.

2.  Schaltungsanordnung nach Anspruch 1,
    **dadurch gekennzeichnet,** daß die an die Schnittstellenbaugruppen (SB1, SB2, SBx) angeschalteten Sende-und Empfangseinrichtungen (HDP11 bis HDPXX) über ein gemeinsames Datenübertragungsleitungsbündel (DDL) mit der peripheren Steuerung (MP) und mit dem internen Datenübertragungsleitungsbündel (PBC-B) der betreffenden Schnittstellenbaugruppe (SB1, SB2, SBx) in Verbindung stehen.

3.  Schaltungsanordnung nach Anspruch 2,
    **dadurch gekennzeichnet,** daß mit dem gemeinsamen Datenleitungsbündel (DDL) mindestens ein Datenendgerät für den Austausch von Informationen über das Sprechwegekoppelnetzwerk (SN) verbindbar ist.

4.  Schaltungsanordnung nach einem der vorangehenden Ansprüche,
    **dadurch gekennzeichnet,** daß die periphere Steuerung (MP) und das gemeinsame Datenübertragungsleitungsbündel (DDL) über periphere Schnittstellenschaltungen (MI, MDD) mit dem schnittstellenbaugruppeninternen Datenübertragungsleitungsbündel (PBC-B) in Verbindung stehen.

5.  Schaltungsanordnung nach Anspruch 1,
    **dadurch gekennzeichnet,** daß die Schnittstellenbaugruppen (SB1, SB2, SBx) Zeit- und Steuerschaltmittel (ZM, SM) für das pulscodierte Senden und Empfangen von Sprach- und/oder Dateninformationen aufweisen, die ebenfalls mit dem schnittstellenbaugruppeninternen Datenübertragungsleitungsbündel (PBC-B) in Verbindung stehen.

6.  Schaltungsanordnung nach einem der Ansprüche 1 bis 5,
    **dadurch gekennzeichnet,**
    daß die an eine Schnittstellenbaugruppe (SB1, SB2, SBx) angeschalteten Sende- und Empfangseinrichtungen (HDP11 bis HDPXX), die schnittstellenbaugruppenindividuell über ein gemeinsames Datenübertragungsleitungsbündel (DDL', DDL'', DDL''') miteinander und mit der peripheren Steuerung (MP', MP'', MP''') der jeweiligen Schnittstellenbaugruppe (SB1, SB2, SBx) und somit indirekt mit der zentralen Steuerung (ZS) in Verbindung stehen, jeweils mit einer bzw. mehreren solcher Sende- und Empfangseinrichtungen (HDP11 bis HDPXX) für den aufeinanderfolgenden bzw. parallelen Austausch von Datenpaketen mit einem bzw. mehreren über das Sprechwegekoppelnetzwerk (SN) ankoppelbaren und gezielt ansteuerbaren Teilnehmerstellen, Leitungsübertragungen und Endgeräten verbindbar sind.

**Claims**

1.  Circuit arrangement for a telecommunication installation, in particular a private branch exchange with subscriber and trunk groups, the respective groups and combined subscriber/trunk groups being connected via in each case one interface module (SB1, SB2, SBx) of such a group both to the speech path switching network (SN) and via a data transmission trunk group (DL) to a central processor (ZS) provided for establishing the connecting paths of the subscriber or trunk which can be seized incoming and outgoing, and the information items being transmitted in pulse code modulation method via the speech path switching network (SN) and the information items being transmitted in a message format with variable data lengths (HDLC procedure) via the data transmission trunk group (DL), and furthermore each interface module (SB1, SB2, SBx) being allocated to one interface circuit (SIU) which has subscriber and/or trunk accesses for transmitting and receiving pulse-code-modulated information items, and one or more transmit and receive devices (HDP11 to HDPXX) which are also used for transmitting and receiving information items in a message format with variable data lengths, being connectable to one interface module (SB1, SB2, SBx) in such a manner that an exchange of such information items occurs in dependence on control commands from the central processor (ZS) via the speech path switching network (SN) with any distant stations, characterised in that the said transmit and receive devices (HDP11 to HDPXX) are connected to subscriber and/or trunk accesses of the interface circuits (SIU), and in that the said exchange of information items occurs in a message format with variable data lengths, also in dependence on control commands of a peripheral processor (MP) in each case allocated to one interface module, which processor is connected via an interface-module-internal data transmission trunk group (PBC-B) to the interface circuit (SIU), to the speech path switching network (SN) and to the data transmission trunk group (DL).

2. Circuit arrangement according to Claim 1, characterised in that the transmit and receive devices (HDP11 to HDPXX) connected to the interface modules (SB1, SB2, SBx) are connected via a common data transmission trunk group (DDL) to the peripheral processor (MP) and to the internal data transmission trunk group (PBC-B) of the relevant interface module (SB1, SB2, SBx).

3. Circuit arrangement according to Claim 2, characterised in that at least one data terminal can be connected to the common data trunk group (DDL) for exchanging information items via the speech path switching network (SN).

4. Circuit arrangement according to one of the preceding claims, characterised in that the peripheral processor (MP) and the common data transmission trunk group (DDL) are connected to the interface-module-internal data transmission trunk group (PBC-B) via peripheral interface circuits (MI, MDD).

5. Circuit arrangement according to Claim 1, characterised in that the interface modules (SB1, SB2, SBx) exhibit time and control switching means (ZM, SM) for the pulse-coded transmission and reception of speech and/or data information items, which are also connected to the interface-module-internal data transmission trunk group (PBC-B).

6. Circuit arrangement according to one of Claims 1 to 5, characterised in that transmit and receive devices (HDP11 to HDPXX), connected to an interface module (SB1, SB2, SBx), which are connected interface-module-individually to one another via a common data transmission trunk group (DDL', DDL'', DDL''') and to the peripheral processor (MP', MP'', MP''') of the respective interface module (SB1, SB2, SBx), and thus indirectly to the central processor (ZS), can be connected in each case with one or more of such transmit and receive devices (HDP11 to HDPXX) to one or more subscriber stations, line circuits and terminals, which can be connected via the speech path switching network (SN) and can be selectively activated, for the successive or parallel exchange of data packets.

**Revendications**

1. Montage pour une installation de télécommunications, notamment une installation téléphonique à postes supplémentaires, comportant des groupes de transmission d'abonnés et de lignes, et dans lequel les groupes respectifs et les groupes combinés de transmission d'abonnés/de lignes sont raccordés, par l'intermédiaire d'un module d'interface (SB1,SB2,SBx) d'un tel groupe, aussi bien au réseau (SN) de couplage de voies téléphoniques que, par l'intermédiaire d'un faisceau de lignes de transmission de données (DL), à une unité de commande centrale (ZS) prévue pour l'établissement des voies de liaison des lignes d'abonnés ou des lignes de jonction pouvant être occupées côté arrivée ou côté départ, et dans lequel les informations concernant le réseau (SN) de couplage de voies téléphoniques sont transmises selon le procédé de modulation par impulsions codées et les informations concernant le faisceau de lignes de transmission de données (DL) sont transmises selon le format d'informations avec une longueur variable de données (procédure HDLC) et dans lequel en outre à chaque module d'interface (SB1,SB2,SBx) est associé un circuit d'interface (SIU), qui possède des bornes de transmission d'abonnés et/ou de lignes pour l'émission et la réception d'informations modulées selon une modulation par impulsions codées, et dans lequel à un module d'interface (SB1,SB2,SBx) peuvent être raccordés un ou plusieurs dispositifs d'émission et de réception (HDP11 à HDPXX), qui sont utilisés également pour l'émission et la réception d'informations dans un format d'informations à longueur variable de données, de telle sorte qu'un échange de telles informations s'effectue en fonction d'instructions de commande de l'unité centrale de commande (ZS) avec n'importe quel poste correspondant par l'intermédiaire du réseau (SN) de couplage de voies téléphoniques,
caractérisé par le fait
que lesdits dispositifs d'émission et de réception (HDP11 à HDPXX) sont raccordés à des bornes de transmission d'abonnés et/ou de lignes des circuits d'interface (SIU), et que ledit échange d'informations s'effectue dans un format d'informations à longueurs variables de données également en fonction d'instructions de commande d'une unité de commande périphérique (MP) associée respectivement à un module d'interface et qui est raccordée, par l'intermédiaire d'un faisceau de lignes de transmission de données (PBC-B), interne au module d'interface, au circuit d'interface (SIV), au réseau (SN) de couplage de voies téléphoniques et au faisceau de lignes de transmission de données (DL).

2. Montage suivant la revendication 1, caractérisé par le fait que les dispositifs d'émission et de réception (HDP11 à HDPXX), qui sont raccordés aux modules d'interface (SB1,SB2,SBx), sont raccordés par l'intermédiaire d'un faisceau commun de lignes de transmission de données (DDL) à l'unité de commande périphérique (MP) et au faisceau interne de lignes de transmission de données (PBC-B) du module d' interface concerné (SB1,SB2,SBx).

3. Montage suivant la revendication 2, caractérisé par le fait qu'au moins un terminal de transmission de données peut être raccordé au faisceau commun de lignes de transmission de données (DDL), pour l'échange d'informations par l'intermédiaire du réseau (SN) de couplage de voies téléphoniques.

4. Montage suivant l'une des revendications précédentes, caractérisé par le fait que l'unité de commande périphérique (MP) et le faisceau commun de lignes de transmission de données (DDL) sont raccordés par l'intermédiaire de circuits périphériques d'interface (MI, MDD) au faisceau de lignes de transmission de données (PBC-B), interne au module d'interface.

5. Montage suivant la revendication 1, caractérisé par le fait que les modules d'interface (SB1,SB2,SBx) possèdent des moyens de commutation temporelle et de commutation de commande (ZM,SM) pour l'émission et la réception, modulées selon une modulation par impulsions codées, d'informations vocales et/ou d'informations de données, qui sont raccordés également au faisceau de lignes de transmission de données (PBC-B), qui est interne aux modules d'interface.

6. Montage suivant l'une des revendications 1 à 5, caractérisé par le fait que les dispositifs d'émission et de réception (HDP11 à HDPXX), qui sont reliés à un module d'interface (SB1,SB2,SBx) et sont raccordés, pour chaque module d'interface, par l'intermédiaire d'un faisceau commun de lignes de transmission de données (DDL',DDL",DDL"') entre eux et à l'unité de commande périphérique (MP',MP",MP"') du module d'interface respectif (SB1,SB2,SBx) et par conséquent indirectement à l'unité de commande centrale (ZS), peuvent être raccordés respectivement à un ou plusieurs tels dispositifs d'émission et de réception (HDP11 à HDPXX) pour l'échange successif ou en parallèle de paquets de données avec des postes d'abonnés, des joncteurs de lignes et des terminaux, pouvant être accouplés par l'intermédiaire du réseau (SN) de couplage des voies téléphoniques et pouvant être commandés de la manière désirée.

FIG 1

FIG 2

EP 0 305 586 B1

FIG 3

16